# EUROPÄISCHE PATENTANMELDUNG

(11) **EP 3 401 569 A1**
(43) Veröffentlichungstag der Anmeldung: **14.11.2018**
(21) Anmeldenummer: 18020146.9
(22) Anmeldetag: 12.04.2018
(51) Int. Cl.: F16G 11/10

(54) **SEILFESTLEGEVORRICHTUNG**

(30) Priorität: 09.05.2017 DE 102017110015
(71) Anmelder: X-CEN-TEK GmbH & Co. KG, 26203 Wardenburg (DE)
(72) Erfinder: Harms, Andreas, 26160 Ofen (DE); Busch, Thomas, 26203 Wardenburg (DE)
(74) Vertreter: Meyer, Thorsten

(57) **Zusammenfassung**

Die Erfindung betrifft eine Seilfestlegevorrichtung (1), wobei zwei parallel gegenüberliegend angeordnete Seilführungen (21, 22) an der flächig ausgebildeten Seilfestlegevorrichtung (1) an einer ersten und zweiten Führungs-Seite (11, 12) angeordnet sind, wobei zwei Seilenden (31, 32), die in den Seilführungen (21, 22) an der Seilfestlegevorrichtung (1) verschieblich geführt sind, ortsfest in der Seilfestlegevorrichtung (1) festlegbar sind, wobei hierzu zwei flächige Teilabschnitte (13, 14) der Seilfestlegevorrichtung vermittels einer hierzu vorgesehenen, Festlegeinrichtung (41, 42) dergestalt lösbar aufeinander festlegbar sind, dass die Seilführungen (21, 22) jeweils eines Seilendes (31, 32) umgelenkt werden und im wesentlichen gegenüberliegend parallel verlaufen, sodass im wesentlichen eine Umkehrung der Führungsrichtung der Seilenden (31, 32) in der Seilführung (21, 22) vorgegeben ist.

## Beschreibung

Die Erfindung betrifft eine Seilfestlegevorrichtung für zwei Seilenden.

Bei der örtlichen Festlegung von zwei Seilenden zueinander ist man auf umständliche Verknotung oder aufwändigere Zusatzmittel wie Clips oder Zwingen angewiesen. Nachteilig bei Zusatzmitteln ist, dass diese zumeist schwer oder sperrig sind.

Aufgabe der Erfindung ist es eine verbesserte Seilfestlegevorrichtung für zwei Seilenden zur Verfügung zu stellen, bei der die Handhabung vereinfacht ist.

Diese Aufgabe wird durch eine Seilfestlegevorrichtung nach den Merkmalen des Anspruchs 1 gelöst.

Erfindungsgemäß ist eine Seilfestlegevorrichtung vorgesehen, wobei zwei parallel gegenüberliegend angeordnete Seilführungen an der flächig ausgebildeten Seilfestlegevorrichtung an einer ersten und zweiten Führungs-Seite angeordnet sind, wobei zwei Seilenden, die in den Seilführungen an der Seilfestlegevorrichtung verschieblich geführt sind, ortsfest in der Seilfestlegevorrichtung festlegbar sind, wobei hierzu zwei flächige Teilabschnitte der Seilfestlegevorrichtung vermittels einer hierzu vorgesehenen, Festlegeinrichtung dergestalt lösbar aufeinander festlegbar sind, dass die Seilführungen jeweils eines Seilendes umgelenkt werden und im wesentlichen gegenüberliegend parallel verlaufen, sodass im wesentlichen eine Umkehrung der Führungsrichtung der Seilenden in der Seilführung vorgegeben ist.

Hierdurch ist auf besonders effektive Weise eine Klemmung gewährleistet, ohne, dass Teile extra vorgehalten werden müssen. Die Seilfestlegevorrichtung ist in ihrer offenen Stellung der Funktionalität der Seilenden nicht abträglich durch die Seilführung an den Seilenden gehalten.

Eine besonders vorteilhafte und daher bevorzugte Ausgestaltung der Erfindung sieht vor, dass die paarweise ausgestaltete Festlegeinrichtung durch zwei miteinander zusammenwirkenden Ösen ausgestaltet ist, durch welche eine den Abstand der Ösen zueinander festlegende Fixiervorrichtung greifen kann.

Eine ebenso bevorzugte Ausgestaltung der Erfindung sieht vor, dass die Seilfestlegevorrichtung aus einem flächigen flexiblen Material hergestellt ist, das übereinandergelegt miteinander vernäht ist, wobei die Seilführungen durch parallel zueinander geführte Nähte gebildet werden. Hierdurch wird die Handhabung sowohl im festgelegten als auch im offen Zustand noch erleichtert.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung einer erfindungsgemäßen Seilfestlegevorrichtung im offenen Zustand,
- Fig. 2: eine schematische Darstellung der Seilfestlegevorrichtung aus Fig. 1 im geschlossenen Zustand, und
- Fig. 3: eine schematische Darstellung der Seilfestlegevorrichtung aus Fig. 2 im geschlossenen Zustand mit Fixierung.

Die in den Figuren gleichen Bezugsziffern bezeichnen gleiche oder gleich wirkende Elemente.

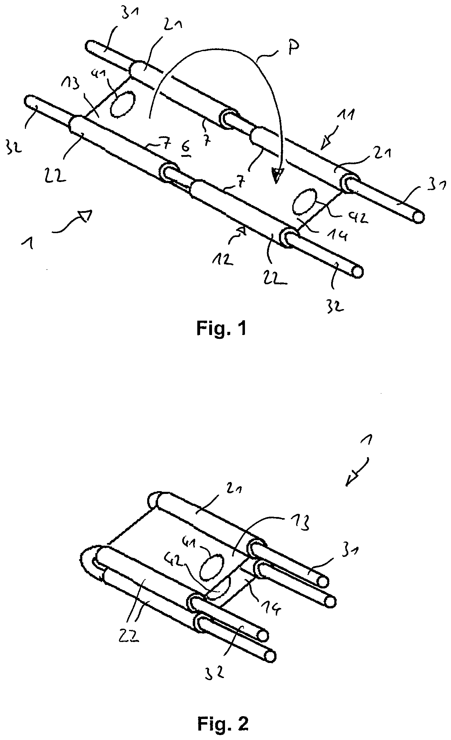

Fig. 1 zeigt eine schematische Seilfestlegevorrichtung 1 im offenen Zustand.

Zwei parallel gegenüberliegend angeordnete Seilführungen 21, 22 sind an der flächig ausgebildeten Seilfestlegevorrichtung 1 an einer ersten und zweiten Führungs-Seite 11, 12 angeordnet.

Durch die Seilführungen 21, 22 sind zwei Seilenden 31, 32 verschieblich geführt.

Die Seilfestlegevorrichtung 1 ist aus einem flächigen flexiblen Material 6 hergestellt, das übereinandergelegt miteinander vernäht ist, wobei die Seilführungen 21, 22 durch parallel zueinander geführte Nähte 7 gebildet werden.

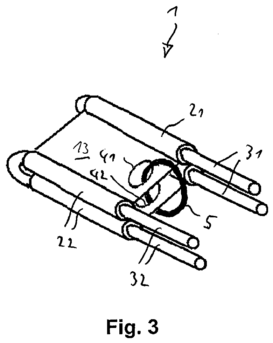

In den Fig. 2 und 3 ist gezeigt, dass die Seilenden 31, 32 in den Seilführungen 21, 22 ortsfest festlegbar sind.
Hierzu werden zwei flächige Teilabschnitte 13, 14 der Seilfestlegevorrichtung 1 zunächst unter Abknicken der Seilenden 31, 32 übereinander gelegt (siehe Pfeil "P" Fig. 2).

Vermittels einer hierzu vorgesehenen Festlegeinrichtung 41, 42 in Form von zwei miteinander zusammenwirkenden Ösen

Die Seilenden 31, 32 werden umgelenkt und verlaufen in der Seilführung 21, 22 im wesentlichen gegenüberliegend parallel, sodass im wesentlichen eine Umkehrung der Führungsrichtung der Seilenden 31, 32 vorgegeben ist. Die Seilenden können sich nicht mehr in den Seilführungen bewegen.

In Fig. 3 ist gezeigt, dass der Abstand der Ösen zueinander durch eine Fixiervorrichtung 5, im Beispiel ein öffenbarer Ring, festgelegt wird. Es kann auch ein Karabiner oder ein Bändsel zum Einsatz kommen. Dadurch ist die Fixierung der Seilenden sicher.

### Bezugszeichenliste

- 1: Seilfestlegevorrichtung
- 11, 12: Führungs-Seite
- 13, 14: Teilabschnitt
- 21, 22: Seilführung
- 31, 32: Seilende
- 41, 42: Festlegeinrichtung
- 5: Fixiervorrichtung
- 6: flexibles Material
- 7: Naht

## Patentansprüche

1. Seilfestlegevorrichtung (1),
**dadurch gekennzeichnet,**
**dass** zwei parallel gegenüberliegend angeordnete Seilführungen (21, 22) an der flächig ausgebildeten Seilfestlegevorrichtung (1) an einer ersten und zweiten Führungs-Seite (11, 12) angeordnet sind,
wobei zwei Seilenden (31, 32), die in den Seilführungen (21, 22) an der Seilfestlegevorrichtung (1) verschieblich geführt sind, ortsfest in der Seilfestlegevorrichtung (1) festlegbar sind,
wobei hierzu zwei flächige Teilabschnitte (13, 14) der Seilfestlegevorrichtung vermittels einer hierzu vorgesehenen, Festlegeinrichtung (41, 42) dergestalt lösbar aufeinander festlegbar sind, dass die Seilführungen (21, 22) jeweils eines Seilendes (31, 32) umgelenkt werden und im wesentlichen gegenüberliegend parallel verlaufen, sodass im wesentlichen eine Umkehrung der Führungsrichtung der Seilenden (31, 32) in der Seilführung (21, 22) vorgegeben ist.

2. Seilfestlegevorrichtung nach Anspruch 1,
**dadurch gekennzeichnet,**
**dass** die paarweise ausgestaltete Festlegeinrichtung (41, 42) durch zwei miteinander zusammenwirkenden Ösen ausgestaltet ist, durch welche eine den Abstand der Ösen zueinander festlegende Fixiervorrichtung (5) greifen kann.

3. Seilfestlegevorrichtung nach Anspruch 1 oder 2,
**dadurch gekennzeichnet,**
**dass** die Seilfestlegevorrichtung (1) aus einem flächigen flexiblen Material (6) hergestellt ist, das übereinandergelegt miteinander vernäht ist, wobei die Seilführungen (21, 22) durch parallel zueinander geführte Nähte (7) gebildet werden.
